# EUROPEAN PATENT APPLICATION

(11) **EP 0 903 680 A2**
(43) Date of publication of application: **24.03.1999**
(21) Application number: 98305715.9
(22) Date of filing: 17.07.1998
(51) Int. Cl.: G06F 19/00, A63F 9/22

(54) **Memory attached to a software carrier of a computer game machine**

(30) Priority: 18.09.1997 CN 97119542
(71) Applicant: Bung Enterprises Limited, Siu Lek Yuen Road, Shatin, N.T. (HK)
(72) Inventor: Leung, Yiu Choi, Room 22, 3/F., Block B, Siu Lek Yuen Road, Shatin, N.T. (HK); Leung, Iu Sum, Room 22, 3F., Block B, Siu Lek Yuen Road, Shatin, N.T. (HK)
(74) Representative: Meddle, Alan Leonard

(57) **Abstract**

An auxiliary memory device connected between a computer game machine and a software carrier having a built-in writable memory. The auxiliary memory device includes a large-capacity writable memory, a user input means for inputting a section number to select a corresponding section of the auxiliary memory. A logical control circuit of the auxiliary memory device substitutes a selected section of the auxiliary memory for a writable memory of the software carrier as the storage location for state of play data at the end of an unfinished game. Different users can use the software carrier of the same computer game machine by selecting different storage sections in the auxiliary memory to record their state of play data. The result is equivalent to each user having his own software carrier, thereby overcoming the contradiction that arises when several users share the same software carrier.

## Description

THE PRESENT invention relates to a computer game apparatus and, more particularly, to an auxiliary memory device attached to a software carrier of a computer game machine.

The game contents of the software carrier (hereinafter called a game card for short) used by many conventional computer game machines are becoming richer and more complicated, so that a user often cannot finish the whole of a game in a single session. Hence a built-in writable memory is commonly included on the game card to enable the state of play at the end of a playing session to be recorded. Generally, this built-in memory takes the form of a static random access memory (SRAM) plus small batteries for electric supply and is used to make the game software automatically record, according to necessity, various kinds of data relating to the state of play e.g. the overcome or finished barriers, editions, score of physical strength, grade of weaponry, total score, list of treasures, etc., or data and selection items input by the user, e.g. the names of the ball teams selected by the user in matches involving several ball teams, the mode of arraying the respective ball payers listed through self-selection, and tactics, etc.

Since there is a memory on the game card, even if all the stages of a game cannot be finished in one go, the state of play data are still retained by the game card at the time the game machine is turned off. When the user plays with this game card next time, the game software can offer the user the options of playing again from the beginning of the game or re-starting again with the state of play as it was at the end of the last session. With the aid of such a built-in memory, the user will thus have the time and the ability to finish the whole game stage-by-stage.

Due to cost considerations, the built-in-memory on the game card usually has a small amount of storage capacity arranged to record the limited game data of a single user, so that problems often occur when the user's family or several users share one game card. For example user A may have finished most of the stages of the game, but user B has never played this game. If the user B starts playing from the beginning, then the data required to be recorded in the built-in memory of the game card when he plays will be substituted for the previous game data of the user A. The score previously obtained by the user A through hard work will be removed and he cannot continue to play the remaining part of the game he left unfinished, but can only continue to play the part of the game left unfinished by the user B. If the user B does not want to change the game data of the user A, he can only continue to play the unfinished game part of the user A, but cannot start playing the preceding interesting game part from the beginning. The sharing of one game card by several persons is thus unsatisfactory.

In order to overcome the above limitation, embodiments of the present invention provide an auxiliary memory device attached to a game card and connected between a computer game machine and the game card so that the user can select any one of the storage sections into which the auxiliary memory is divided as a replacement for the memory on the game card when the games in this game card are played. That is to say, the data previously written into the built-in memory of the game card during game-playing are not written into the game card, but into a certain section of the auxiliary memory selected by the current user. Different users use different storage sections and they can finish the game in the game card respectively from beginning to end without contradicting each other. Even the same user can select several storage sections for playing from the beginning several times and select different methods and paths for fulfilment or try to find out the delight of finishing the game in different modes. For example, there may be many different paths in a certain type of game map such that, once a user wrongly enters a blind alley, he has to start over again. At this time, even with the aid of the built-in memory of the game card, it cannot return to select the right path, but has to start over again because the selection data of the wrong path may have been recorded. Alternatively, a game may have many different paths leading from the beginning to the end (it is said that "all roads lead to Rome"). Having a plurality of selection storage sections in substitution for a single built-in memory in the game card will enable the user(s) to finish the game by different paths, and in the mode of stage by stage, so as to enjoy an all-round delight in the game.

A computer game apparatus according to the present invention comprises: (a) a computer game machine; (b) a software carrier of the computer game machine, a game card, with a built-in writable memory; (c) an attached memory means specially for the game card of the computer game machine.

In order that the invention may be more readily understood, embodiments thereof will now be described, by way of example, with reference to the accompanying drawings, in which:
Fig. 1 is a block circuit diagram of a known computer game apparatus indicating the existing technology;
Fig. 2 is a block circuit diagram of a computer game apparatus in accordance with an embodiment of the present invention.
Fig. 3 is a block circuit diagram of another computer game apparatus; and
Fig. 4 is a block circuit diagram of a computer game apparatus in accordance with another embodiment of the present invention.

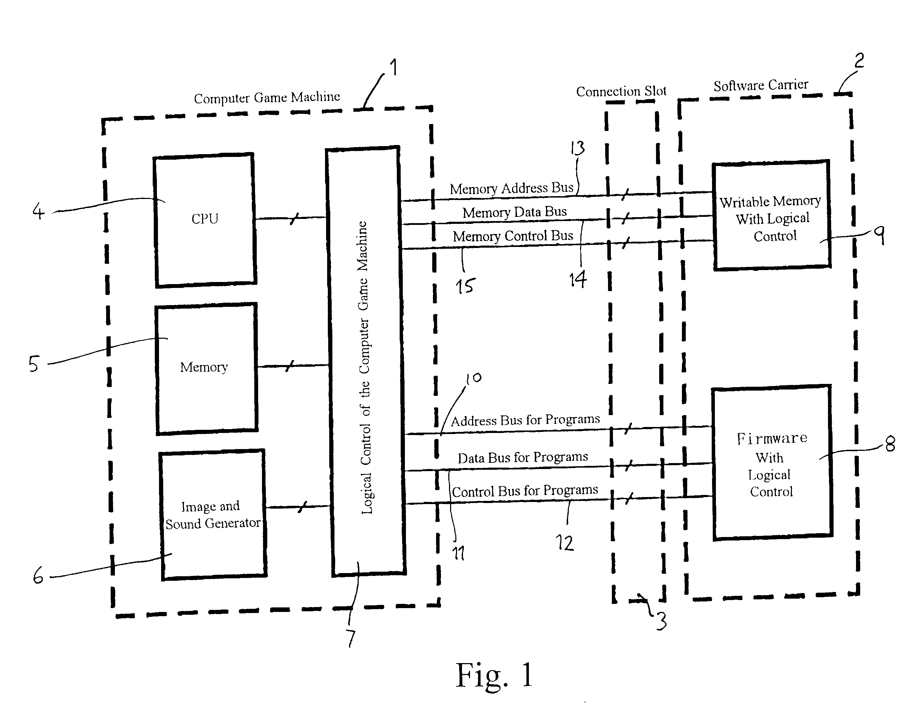

Referring to Figure 1, a known computer game apparatus comprises a computer game machine 1 and a software carrier or game card 2 connectable to the computer game machine 1 via a connector 3.

The computer game machine 1 comprises a central processing unit (CPU) 4, a memory 5 and an image and sound generator 6, each connected to a logical control 7 of the game machine 1.

The game card 2 carries firmware with logical control 8 and a built-in writable memory with logical control 9. The respective program address, program data and program control signal lines 10, 11 and 12 of the firmware 8 are connected directly to the pins of the corresponding signal lines of the game machine 1 through the pins of the connector 3, while the respective memory address, memory data and memory control lines 13, 14 and 15 of the writable memory 9 for read and write operations are connected directly to the pins of the corresponding signal lines of the game machine 1 through the connector 3.

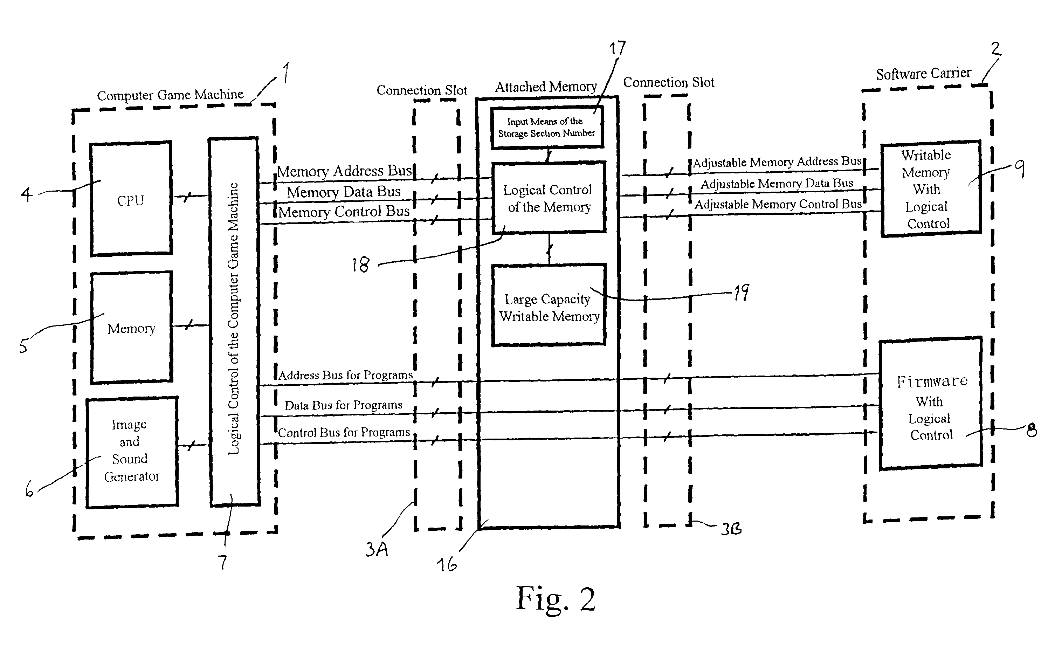

Referring now to Fig. 2, in a computer game machine apparatus embodying the invention an auxiliary attached memory device 16 is connected between the computer game machine 1 and the game card 2 via connectors 3A and 3B.

The auxiliary memory device 16 comprises user's input means 17, a logical control 18 and a large capacity writable memory 19 having a capacity of from several times to several hundred times the capacity of the memory 9 of the game card 2. The writable memory 19 is connected to the logical control 18 which is also connected to the user's input means 17.

The signal lines 13, 14 and 15 of the writable memory 9 of the game card 2 in this case are not directly connected to the corresponding pins of the game machine 1 but are connected to the game machine 1 via the logical control circuit 18 of the auxiliary memory device 16. The respective signal lines 10, 11 and 12 used for the software of the game card 2 are still, however, connected directly to the pins of the corresponding signals of the computer game machine 1 through a connector of the auxiliary memory device 16.

The user's input means 17, which may include a display, serves to enable a user to input a number to select a certain section in the writable memory 19 of the auxiliary memory device 16, i.e. to calculate an initial address in the large-capacity writable memory 19. The size of one section in this memory 19 is equal to the storage capacity of the writable memory 9 in the game card 2 so that such section can replace the writable memory 9 on the game card 2 and fulfil the same function, based on the address (from 0 - the maximum capacity, - 1, generally taken as a numerical value of a low-order address wire) of the writable memory 9 on the game card 2 as transmitted from the computer game machine plus the initial address (generally taken as a numerical value of a high-order address wire) calculated by reference to the selected number of the user. The true address of the large capacity writable memory 19 in the auxiliary memory device 16 that is actually called at this time is obtained for use in the read and write operations. Then a control signal transmitted from the computer game machine 1 is co-ordinated and sent to the large-capacity writable memory 19 for control of reading and writing after direct adjustment or through adjustment of the logical control circuit 18 of the memory device 16. That is to say, when the same game card is co-ordinated with the operations of the computer game machine 1, different users select different storage sections to start their respective game journeys. The result is equivalent to each user having a special game card of his own, thereby overcoming the contradiction which arises when several users share one game card.

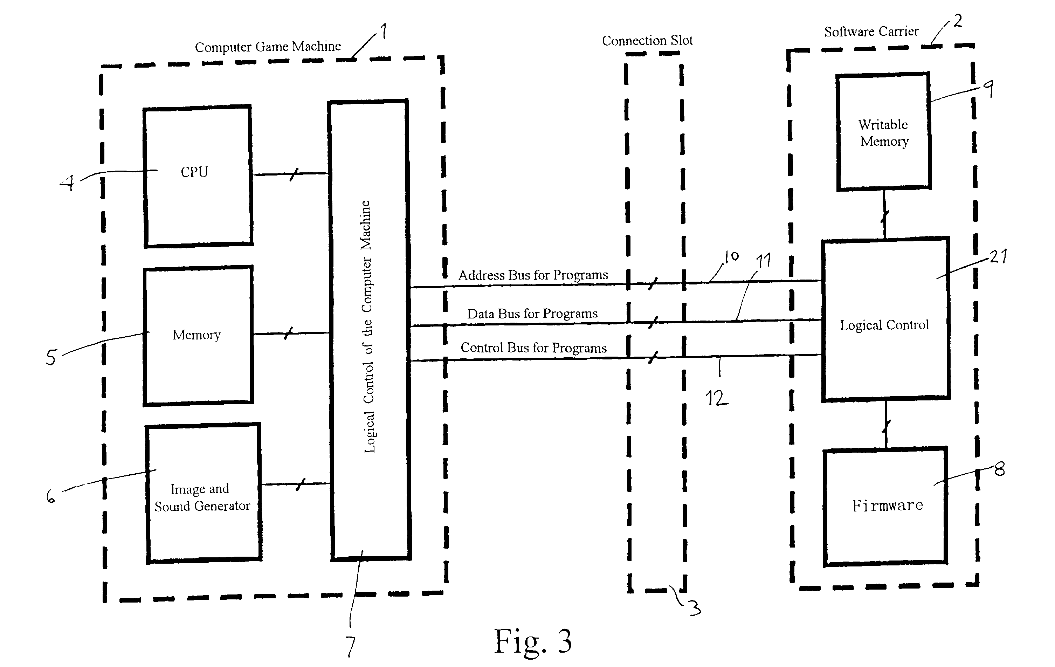

The game machine apparatus of Fig. 3 is similar to that of Fig. 1, the different being merely that the computer game machine 1 is not used to provide the address of the writable memory 9 of the game card 2. The data and control signal lines are used for the game card. The built-in writable memory 9 and firmware 8 of the game card 2 respectively correspond to the range of different CPU addresses for the use of the computer game machine and they jointly use the signal lines of address, data and control, etc. through a control circuit 21 on the game card 2.

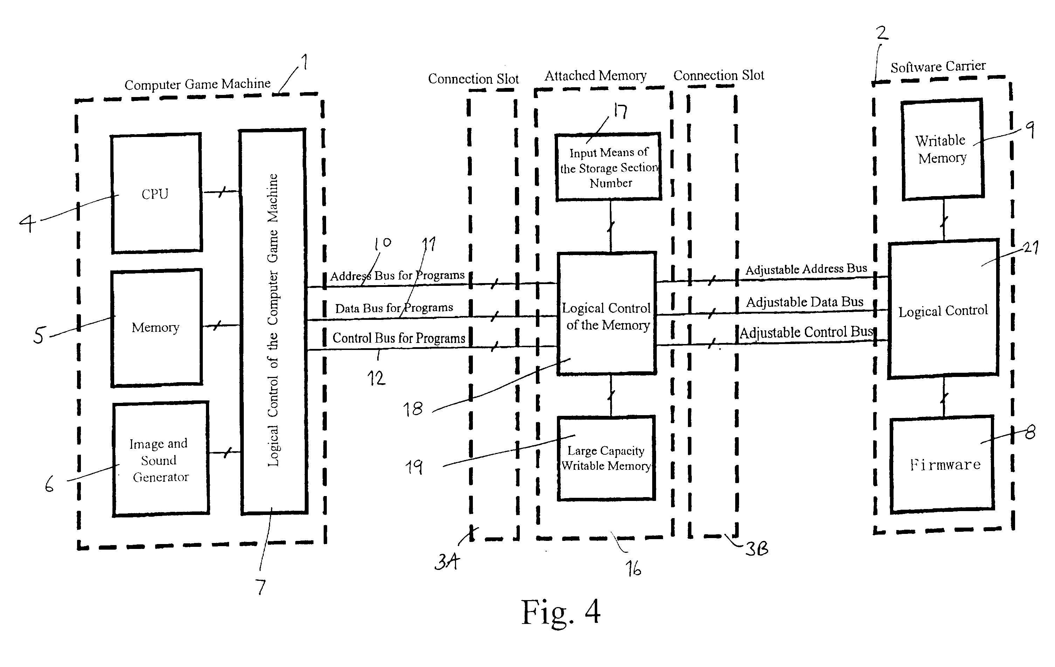

Accordingly, in a corresponding computer game apparatus embodying the invention and shown in Fig. 4, the logical control circuit 18 of the auxiliary memory device 16 is connected to address, data and control signal lines from the computer game machine 1 and, as required, connects the intact signal lines of address, data and control, etc. with the game card or transmits a part of the corresponding signals to the game card after logical adjustment. For example, when the computer game machine 1 sends out a read address and a control signal for the firmware 8 of the game card 2, the logical control circuit 21 of the auxiliary memory device 16 will make the respective signal lines directly go into the game card 2 so as to enable the computer game machine 1 to smoothly read the data of the above address corresponding to the firmware 8 from the data signal lines. When the computer game machine 1 sends out a memory address and control signal for the writable memory 9 on the read or write game card 2, the logical control 18 of the auxiliary memory device 16 will calculate the basic address (generally taken as a numerical value of the high-order address wire) that should be transmitted to its large-capacity writable memory 19 on the basis of the storage section number input by the user. An internal relative address value (generally taken as a numerical value of the low-order address wire) calculated from the address of the writable memory 9 on the read/write game card and sent out by the computer game machine is added, the added address is sent to the large-capacity writable memory 19 within the auxiliary memory device 16, and the control signal from the game computer 1 is directly adjusted or adjusted through the logical control circuit of the memory as the control signal required in co-ordination with the reading and writing of the large-capacity writable memory in the memory device 16. Therefore the user is provided with the same result as in the embodiment of Fig. 2: one of the spaces of the large-capacity writable memory 19 in the auxiliary memory device 16 is selected through the storage section number input by the user instead of the writable memory 9 on the game card 2 and is used by the game software to record the key data of the state of play required to play the game. Different users thus select different storage sections to start their respective game journeys and the result is equivalent to each user having a special game card of his own. The contradiction involved in several users sharing one game card is accordingly overcome.

Moreover, in order to exchange and borrow the data that already exists in the writable memory 9 of the game card 2 between the respective users, one or more of the numbers able to be input by the user may be designated to represent the re-connection of the writable memory 9 in the game card 2 for the reading and writing of data by the game software. For example, when a game is started, the data in the writable memory 9 on the game card 2 may first be selected to start the game and during the game, the user may use the input means to select a certain section of the memory of the auxiliary memory device 16 to substitute for the memory 9. The new game process will then be stored in the memory section selected by the user in the auxiliary memory device 16 and vice versa.

Although preferred embodiments of the present invention have been described above, it will be appreciated that the prevent invention is not merely limited to the above embodiments and ordinary persons skilled in the art may make various modifications to the present invention without departing from the scope of the present invention as defined in the following claims.

## Claims

1. A computer game apparatus comprising:
a computer game machine; and
a software carrier for storing computer game software;
the apparatus being characterised by:
an auxiliary memory device connected between the computer game machine and the software carrier, the auxiliary memory device having a writable memory for storing data relating to the state of the play reached in at least one unfinished game played by one or more users using the computer game machine and the software carrier.

2. A computer game apparatus according to Claim 1, wherein the software carrier has a built-in writable memory for storing data relating to the state of play reached in an unfinished game played by a single user, and the capacity of the writable memory of the auxiliary memory device is at least equal to the capacity of the built-in writable memory.

3. A computer game apparatus according to Claim 2, wherein the auxiliary memory device includes an input means operable by a user to select the or a section of the writable memory of the auxiliary memory device instead of the in-built writable memory to store the user's state of play.

4. A computer game apparatus according to Claim 3, wherein the auxiliary memory device is connected to the computer game machine by an address bus, a data bus and a control bus, and the auxiliary memory device includes a logical control circuit for processing signals on the buses based on the input provided by the user to substitute the writable memory of the auxiliary memory device or a section thereof for the in-built memory of the software cashier.

5. A computer game apparatus according to Claim 3, wherein the logical control circuit of the auxiliary memory device recognises at least one predesignated input from the input means of the auxiliary memory device as an instruction to use the built-in writable memory of the software carrier instead of the writable memory of the auxiliary memory device to store the state of play data.

6. A computer game apparatus according to Claim 4 or 5, wherein the software carrier includes firmware having a logical control which is separate from the logical control of the built-in writable memory, the writable memory being connected to the computer game machine via the logical control circuit of the auxiliary memory device by memory address, memory data and memory control buses and the firmware being connected directly to the computer game machine through the auxiliary memory device by program address, program data and program control buses.

7. A computer game apparatus according to Claim 4 or 5, wherein the software carrier includes firmware which shares a common logical control of the software carrier being connected to the computer game machine via the logical control circuit of the auxiliary memory device by common address, data and control buses.

8. A computer game apparatus according to any one of Claims 2 to 7, wherein the writable memory of the auxiliary memory device has a capacity of from several to several hundred times the capacity of the built-in writable memory of the software carrier.
